# EUROPEAN PATENT APPLICATION

(11) **EP 4 772 337 A1**
(43) Date of publication of application: **08.07.2026**
(21) Application number: 25217338.0
(22) Date of filing: 20.11.2025
(51) Int. Cl.: B32B 1/00, B32B 7/12, B32B 15/08, B32B 15/082, B32B 15/085, B32B 27/08, B32B 27/10, B32B 27/28, B32B 27/30, B32B 27/32, B32B 27/34, B32B 27/36, B32B 27/40, B32B 7/05, B32B 7/06, C09J 7/35

(54) **EASY-PEEL TYPE CLOSURE LINER**

(30) Priority: 06.01.2025 TW 114100516; 21.07.2025 TW 114127524
(71) Applicant: Yang, Yen-Wu, 221 New Taipei City (TW)
(72) Inventor: Yang, Yen-Wu, 221 New Taipei City (TW)
(74) Representative: DTS Patent- und Rechtsanwälte PartmbB

(57) **Abstract**

The present application provides an easy-peel type closure liner (50), which includes a functional layer (100), a strong adhesive layer (200), an electromagnetic induction heating layer (300), a sealing layer (400), and a release layer (210). An upper surface of the easy-peel type closure liner (50) includes a lifting part (610), a lifting neck (620), and a hollow area (630) which is formed by cutting with a hollow cutting line (720). The hollow area (630) is located on the periphery of the lifting part (610), and is connected to two sides of the lifting neck (620). The functional layer (100) is provided with a tear line (710). One end of the tear line (710) is connected to the lifting part (610), and the other end of the tear line (710) and the outermost circle (OC) of the easy-peel type closure liner (50) are spaced by a tearing spacing (715). The tearing spacing (715) is greater than 0 mm, and is smaller than or equal to 20 mm.

## Description

### BACKGROUND OF THE INVENTION

### 1. Field of the Invention

The present application relates to a closure liner, and particularly relates to an easy-peel type closure liner.

### 2. Description of the Related Art

In order to prevent contents from leaking and deteriorating due to the influence of the external environment, openings of a beverage can, a medicine can and other packaging containers will be sealed with closure liners. Moreover, generally, the closure liners are made of materials such as aluminum foil or cardboard.

By tightly fitting the closure liner to the container opening, it can achieve of the effects of preventing the contents from leaking and preserving the contents tightly.

### BRIEF SUMMARY OF THE INVENTION

However, because the conventional design of a closure liner is mainly considered for sealing, but not for the ease of peeling, in such case, the aluminum foil or the cardboard at an opening of a container is not easy to open with fingers, and it is cumbersome and dangerous to cut with a knife or poke with an awl, moreover, the above-mentioned method is easy to retain part of the closure liner, resulting in inconvenience for users.

Therefore, how to solve the above-mentioned problems on the conventional closure liner, and effectively improve the convenience of peeling, has become a problem urgently to be solved in the art.

**In** order to solve the above-mentioned problem, the present application provides an easy-peel type closure liner, which includes a functional layer including a surface film and a bonding film in a sequence from top to bottom; a sealing layer, located below the functional layer; a strong adhesive layer, located between the surface film and the sealing layer; and an electromagnetic induction heating layer, located between the surface film and the sealing layer; an upper surface of the easy-peel type closure liner includes: a lifting part, a lifting neck, and a hollow area, formed by cutting with a hollow cutting line; the hollow area is located on the periphery of the lifting part, and is connected to two sides of the lifting neck; the thickness of the easy-peel type closure liner corresponding to the hollow area is smaller than the maximum thickness of the easy-peel type closure liner; the functional layer of the easy-peel type closure liner is provided with a tear line, one end of the tear line is connected to the lifting part, the other end of the tear line and the outermost circle of the easy-peel type closure liner are spaced by a tearing spacing, the tearing spacing is greater than 0 mm, and the tearing spacing is smaller than or equal to 20 mm; the tear line is provided with at least one tearing cutting point; and the easy-peel type closure liner further comprises a release layer, and the release layer is located on a lower surface of the bonding film corresponding to the lifting part, or located on an upper surface or a lower surface of the electromagnetic induction heating layer corresponding to the lifting part, the lifting neck, and the hollow area.

In some embodiments, the functional layer corresponding to the at least one tearing cutting point is not completely cut off in the vertical direction, and the functional layer corresponding to the tear line except the at least one tearing cutting point is completely cut off.

In some embodiments, the upper surface of the functional layer corresponding to the at least one tearing cutting point is not cut off in the vertical direction at a position 0.02 mm to 0.9 mm in the horizontal direction along the tear line, and the functional layer corresponding to the tear line except the at least one tearing cutting point is completely cut off.

In some embodiments, a tearing and twisting cutting line is further arranged on the upper surface of the easy-peel type closure liner and connected to the lifting part, and the tear line and the tearing and twisting cutting line are connected to two ends of the lifting part respectively.

In some embodiments, the material of the surface film is at least one selected from the group consisting of Polyimide (PI), Polyethylene Naphthalate (PEN), Polyethylene Terephthalate (PET), Polypropylene (PP), Polyethylene (PE), and Polyamide (PA).

In some embodiments, the material of the bonding film is at least one selected from the group consisting of Expandaple Polyethylene (EPE), Expandaple Polyproplene (EPP), PE, PP, PET, and PA.

In some embodiments, the sealing layer is a hot melt glue or a combination of a sealing film and an adhesive, the material of the hot melt glue is at least one selected from the group consisting of Ethylene Vinyl Acetate copolymer (EVA), Polyisobutylene (PIB), Ethylene Butyl Acrylate Copolymer (EAA), Ethylene Acrylic Acid copolymer (EEA), Ethylene Butyl Acrylate Copolymer (EBA), Ethylene Methacrylic Acid Copolymer (EMAA), Polyacrylate, Polyacetate, and Ethylene Methacrylic Acid copolymer (EMAC), the material of the sealing film is at least one selected from the group consisting of PE, PP, PET, PA, Polyvinylidene Chloride (PVDC), and Ethylene Vinyl Alcohol Copolymer (EVOH), and the adhesive is located between the sealing film and the electromagnetic induction heating layer.

In some embodiments, the strong adhesive layer is a dry compound adhesive or a hot melt lamination glue, the peel strength between the bonding film and the electromagnetic induction heating layer is greater than 12 N/15 mm through the dry compound adhesive or the hot melt lamination glue after lamination, and the material of the hot melt lamination glue is at least one selected from the group consisting of PE, PP, EMAA, EAA, EEA, EMAC, and Ethylene-Methyl Methacrylate Copolymer (EMMA).

In some embodiments, the material of the release layer is at least one selected from the group consisting of wax, gloss oil, and silicone oil, the release layer is coated on a lower surface of the bonding film or the electromagnetic induction heating layer, and a coating area of the release layer is not smaller than the lifting part.

In some embodiments, the material of the release layer is at least one selected from the group consisting of wax, gloss oil, and silicone oil, the release layer is coated on the upper surface of the electromagnetic induction heating layer, and a coating area of the release layer is not smaller than the lifting part and the hollow area.

In some embodiments, between the surface film and the bonding film, the following is further included: a lamination film, the material of the lamination film being at least one selected from the group consisting of PI, PEN, PET, PA, PP, PE, EPE, and EPP.

In some embodiments, the electromagnetic induction heating layer is aluminum foil or a wireless information integrated flake.

In some embodiments, the wireless information integrated flake includes a base film; an information and heating layer, including an information area and an electromagnetic induction heating ring; and a first adhesive layer, located between the base film and the information and heating layer; the information area is provided with an antenna and a chip which are electrically interconnected, and the electromagnetic induction heating ring surrounds the information area in a plane view angle.

In some embodiments, the wireless information integrated flake further includes: a protective layer, located on one side, away from the base film, of the information and heating layer, and a second adhesive layer, located between the information and heating layer and the protective layer.

In some embodiments, a spacing is formed between the electromagnetic induction heating ring and the information area.

In some embodiments, the spacing is a space between the outermost edge of the information area and the innermost edge of the electromagnetic induction heating ring, and the space is 0.1 mm to 3 mm.

In some preferred embodiments, a spacing fully occupies the position between the electromagnetic induction heating ring and the information area.

In some embodiments, the information and heating layer further includes at least one physical connecting bridge which is used for connecting the information area to the electromagnetic induction heating ring.

With adoption of the easy-peel type closure liner provided by the present application, those with ordinary knowledge in the art of the present application can prevent the contents from leaking and deteriorating due to the influence of the external environment, and the user can directly pinch the lifting part by hand to upwards lift along the lifting part, the lifting neck and the tear line to strip without the help of external objects, then each layer in the easy-peel type closure liner can be upwards lifted along with the lifting part, thereby further realizing the effect of facilitating opening and complete peeling.

One of aspects in the present application is proposed based on the problem points in the conventional technology, and it aims to provide the easy-peel type closure liner that can further improve the convenience for the user to peel it off and the completeness of peeling of the closure liner. In other words, the easy-peel type closure liner provided by the present application can take into account the tightness of the preserved contents, the convenience for the user to peel, and the completeness of peeling of the closure liner.

### BRIEF DESCRIPTION OF THE DRAWINGS

FIG. 1A is a schematic cross-sectional diagram of an easy-peel type closure liner according to the present application.
FIG. 1B is a schematic cross-sectional diagram of a first change form of the easy-peel type closure liner shown in FIG. 1A.
FIG. 1C is a schematic cross-sectional diagram of a second change form of the easy-peel type closure liner shown in FIG. 1A.
FIG. 2 is an overlook diagram of an easy-peel type closure liner according to Embodiment 1 of the present application.
FIG. 3 is an overlook diagram of an easy-peel type closure liner according to Embodiment 2 of the present application.
FIG. 4 is an overlook diagram of an easy-peel type closure liner according to Embodiment 3 of the present application.
FIG. 5 is an overlook diagram of an easy-peel type closure liner according to Embodiment 4 of the present application.
FIG. 6A is a schematic cross-sectional diagram of a second change form of the easy-peel type closure liner shown in FIG. 1A.
FIG. 6B is a schematic cross-sectional diagram of a third change form of the easy-peel type closure liner shown in FIG. 1A.
FIG. 6C is a schematic cross-sectional diagram of a fourth change form of the easy-peel type closure liner shown in FIG. 1A.
FIG. 7 is a schematic cross-sectional diagram of a wireless information integrated flake according to Embodiment 1 of the present application.
FIG. 8A is a schematic plan diagram of a specific example of an information and heating layer according to the present application.
FIG. 8B is a schematic plan diagram of another specific example of an information and heating layer according to the present application.
FIG. 9A is a schematic plan diagram of a specific example of an information area according to the present application.
FIG. 9B is a schematic plan diagram of another specific example of an information area according to the present application.
FIG. 10 is a schematic cross-sectional diagram of a wireless information integrated flake according to Embodiment 2 of the present application.
FIG. 11A to FIG. 11C are overlook diagrams of an easy-peel type closure liner according to other embodiments of the present application.

### DETAILED DESCRIPTION OF THE INVENTION

The implementations of the present application are described below with specific embodiments, and those familiar with this skill can understand other advantages and effects of the present application from the contents disclosed in the description. The present application may also be implemented or applied with other different specific embodiments, and the details in the description may also be modified and changed based on different views and applications, without departing from the spirit of the present application.

Unless otherwise specified in the text, the term "A to B" used in the description and the accompanying claims includes the meaning of "above A and below B". For example, the term "10 wt% to 40 wt%" includes the meaning of "greater than 10 wt% and less than 40 wt%".

**In** addition, in the context described in the present application, it is to be noted that terms such as "first", "second", and "third" are used for distinguishing elements, and not to limit the elements themselves or to indicate a particular order of elements. It is to be noted that in the description described below, the same component or step can be represented with the same number.

Further, in the context of the present application, "tearing spacing" refers to "the shortest distance from one end of a tear line (i.e., the end opposite to the other end connected to a lifting part) to the outermost circle of the easy-peel type closure liner".

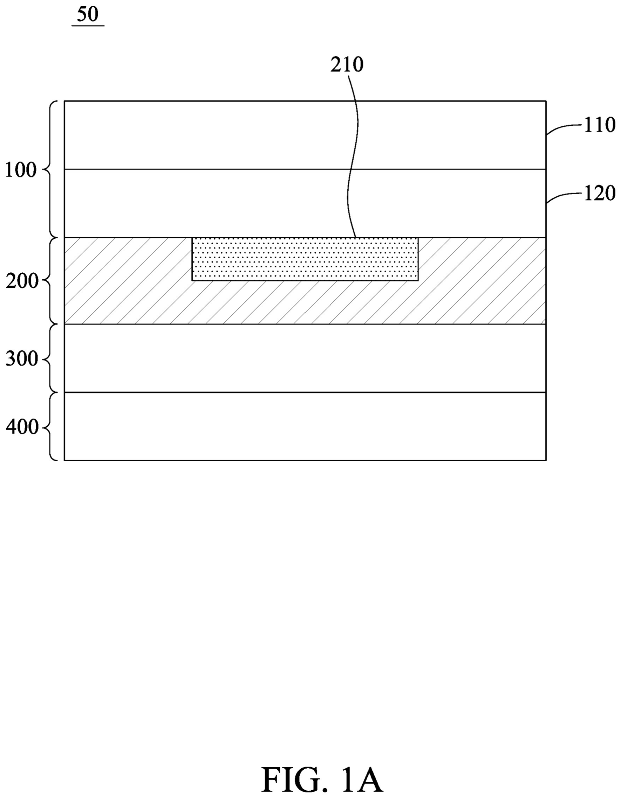

With reference to FIG. 1A, FIG. 1A is a schematic cross-sectional diagram of an easy-peel type closure liner 50 according to the present application. As shown in FIG. 1A, the easy-peel type closure liner 50 includes a functional layer 100, a strong adhesive layer 200, an electromagnetic induction heating layer 300, and a sealing layer 400 in a sequence from top to bottom. The functional layer 100 includes a surface film 110 and a bonding film 120 in a sequence from top to bottom. Moreover, a release layer 210 is further arranged between the functional layer 100 and the electromagnetic induction heating layer 300. Each layer will be described in more detail below.

### <<Surface film>>

As shown in FIG. 1A, the surface film 110 is used for manufacturing a surface layer (i.e., the uppermost layer) of the easy-peel type closure liner 50, and either an upper surface or a lower surface of the surface film may be a printing surface for printing different patterns. In some embodiments, the material of the surface film 110 may be at least one selected from the group consisting of PI, PEN, PET, PP, PE, and PA. Moreover, the thickness of the surface film 110 is preferably 12 µm to 150 µm, and within this range, the tensile strength is high, the surface is flat, and the brightness is good. Additionally, when heat conduction is sensed below the easy-peel type closure liner 50, the surface film 110 can be prevented from being adhered to other external elements (such as bottle caps).

### <<Bonding film>>

As shown in FIG. 1A, the bonding film 120 is used for lamination with the electromagnetic induction heating layer 300. In some embodiments, the material of the bonding film 120 may be at least one selected from the group consisting of EPE, EPP, PE, PP, PET, and PA. Moreover, the thickness of the bonding film 120 is preferably 12 µm to 200 µm. Therefore, the peel strength between the bonding film 120 and the electromagnetic induction heating layer 300 after lamination can be improved.

### <<Strong adhesive layer>>

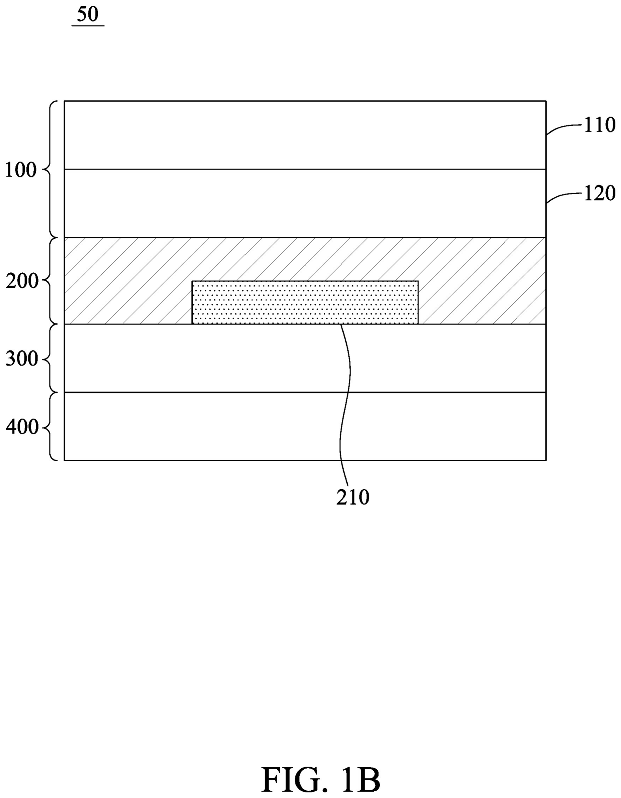

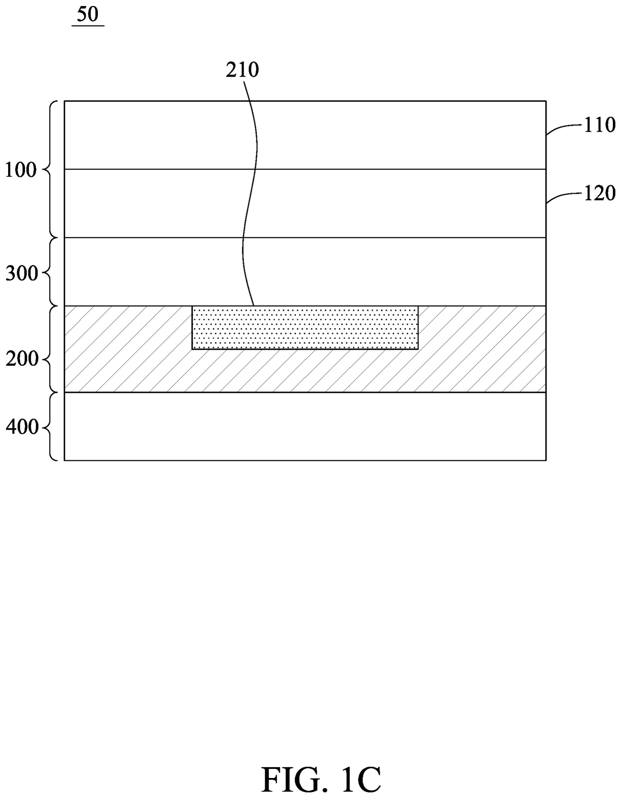

As shown in FIG. 1A, the strong adhesive layer 200 is located between the bonding film 120 and the electromagnetic induction heating layer 300, and can be used for laminating the bonding film 120 with the electromagnetic induction heating layer 300, so that the peel strength between the bonding film 120 and the electromagnetic induction heating layer 300 after lamination is greater than 12 N/15 mm. Moreover, the release layer 210 is also arranged between the bonding film 120 and the electromagnetic induction heating layer 300, and the release layer 210 is made of an easy-peeling material, so that the strong adhesive layer 200 can be further utilized to tightly laminate the bonding film 120, the release layer 210, and the electromagnetic induction heating layer 300 with one another, and the peel strength after lamination is greater than 12 N/15 mm. In some embodiments, the strong adhesive layer 200 may be, for example, a dry compound adhesive, and the thickness of the dry compound adhesive is preferably 0.5 µm to 6 µm, but is not limited thereto. In some other embodiments, the strong adhesive layer 200 may be, for example, a hot melt lamination glue, the material of the hot melt lamination glue may be at least one selected from the group consisting of PE, PP, EMAA, EAA, EEA, EMAC, and EMMA, and the thickness of the hot melt lamination glue is preferably 4 µm to 50 µm, but is not limited thereto. Therefore, through the arrangement of the strong adhesive layer 200, when the user pinches the lifting part by hand to pull upwards to peel, each layer in the easy-peel type closure liner 50 can be more easily pulled upwards and peeled. In some embodiments, taking FIG. 1A (or FIG. 1B described later) as an example, the strong adhesive layer 200 is located between the functional layer 100 and the electromagnetic induction heating layer 300. In some other embodiments, taking FIG. 1C described later as an example, the strong adhesive layer 200 is located between the electromagnetic induction heating layer 300 and the sealing layer 400.

### <<Release layer>>

As shown in FIG. 1A, the release layer 210 is located between the bonding film 120 and the electromagnetic induction heating layer 300. In some embodiments, the material of the release layer 210 may be at least one selected from the group consisting of wax, gloss oil, and silicone oil, and the thickness of the release layer 210 is preferably 0.5 µm to 40 µm, but is not limited thereto. Moreover, the surface of the release layer 210 may be, for example, a smooth surface, a matte surface, or a dot matrix surface, so that the release layer 210 has the characteristic of being easy to peel. Therefore, through the arrangement of the release layer 210, the lifting part is not prone to being adhered by the electromagnetic induction heating layer 300 below, so that the user can lift and pinch the lifting part more easily, and then each layer in the easy-peel type closure liner 50 can be pulled up more easily along with the lifting part, which improves the convenience for the user to peel. In some embodiments, taking FIG. 1A as an example, the release layer 210 is located on a lower surface of the bonding film 120 corresponding to the lifting part. In some other embodiments, taking FIG. 1B described later as an example, the release layer 210 is located on an upper surface of the electromagnetic induction heating layer 300 corresponding to the lifting part, the lifting neck, and the hollow area. Moreover, in some other embodiments, taking FIG. 1C described later as an example, the release layer 210 is located on a lower surface of the electromagnetic induction heating layer 300 corresponding to the lifting part, the lifting neck, and the hollow area.

In addition, in some embodiments, taking FIG. 1A as an example, when the release layer 210 is coated on the lower surface of the bonding film 120, a coating area of the release layer 210 is not smaller than an area corresponding to the lifting part. Therefore, after the hollow area is cut off from the functional layer 100 and the functional layer 100 is laminated with a layer below, the lifting part is not prone to being adhered by the electromagnetic induction heating layer 300 below, so that the lifting part can be lifted and pinched more easily, and the convenience for the user to peel is improved.

### <<Electromagnetic induction heating layer>>

In some embodiments, the electromagnetic induction heating layer 300 may be aluminum foil or a wireless information integrated flake. The aluminum foil may be of an existing structure in the conventional closure liner, and the thickness of the aluminum foil is preferably 10 µm to 40 µm, so that the blocking function for moisture and oxygen can be enhanced, and then the effects of preventing contents from leaking and preserving the contents tightly are achieved. Moreover, according to the present application, the wireless information integrated flake may be used for replacing the aluminum foil, so that the use amount of the aluminum foil can be effectively reduced, and the energy consumption is reduced. Specifically, by means of the wireless information integrated flake according to the present application, the wireless information transmission function can be added, the waste of aluminum foil materials can be reduced, the energy consumption is reduced, the waste of manpower is avoided, the interference of metal and liquid is avoided, the production efficiency is improved, the communication performance is good, the communication distance is greatly increased, and the development of automation, digitization and intelligence of factories, warehouses, logistics, shops and unmanned cashier management is greatly improved.

### <<Sealing layer>>

The sealing layer 400 is used for sealing the container opening so as to prevent contents in a container from leaking and/or deteriorating due to the influence of the external environment. In some embodiments, taking FIG. 1A as an example, the sealing layer 400 may be, for example, a hot melt glue, but is not limited thereto. Moreover, the material of the hot melt glue may be at least one selected from the group consisting of EVA, PIB, EAA, EEA, EBA, EMAA, EMAC, polyacrylate, and polyacetate, but is not limited thereto; and the thickness of the hot melt glue is preferably 4 µm to 100 µm. Through some types of provided hot melt glue, the adhesive is not needed, and even if the content of a glass container contains water, a continuous sealing effect can be achieved; and when the content of the glass container contains hot pepper, garlic, fermented bean curd, honey and spicy additives, the continuous sealing effect can also be achieved.

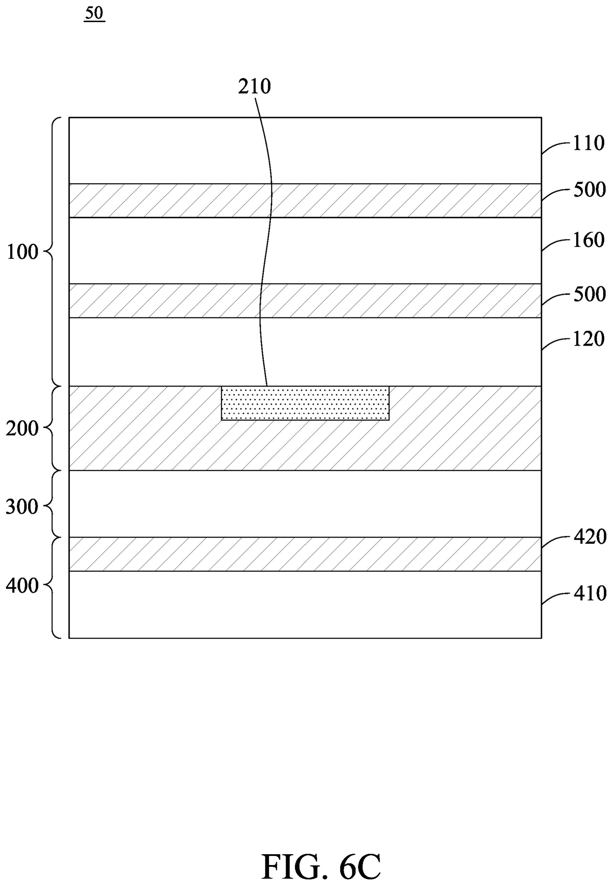

Moreover, in some other embodiments, taking FIG. 6C described later as an example, the sealing layer 400 may be, for example, a combination of a sealing film 410 and an adhesive 420, and the adhesive 420 is located between the sealing film 410 and the electromagnetic induction heating layer 300. In some embodiments, the material of the sealing film 410 may be at least one selected from the group consisting of PE, PP, PET, PA, PVDC and EVOH, and the thickness of the sealing film 410 is preferably 12 µm to 100 µm; and the adhesive 420 may be the conventional adhesive (such as dry compound adhesive), but is not limited thereto.

As described above, when the sealing layer 400 is made of the hot melt glue or the combination of the sealing film and the adhesive, the user can more easily peel the easy-peel type closure liner 50 from the bottle opening, or the user can more easily and cleanly peel the easy-peel type closure liner 50 from the bottle opening.

In addition, although not shown in FIG. 1A, each layer in the functional layer 100 of the easy-peel type closure liner 50 according to the present embodiment may be laminated in various manners (such as adhering, bonding or attaching). In other words, those with ordinary knowledge in the art of the present application can use the conventional binder (such as the dry compound adhesive) to laminate each layer in the functional layer 100 (that is, the surface film 110 and the bonding film 120 are laminated, as shown in FIG. 1A).

With reference to FIG. 1B, FIG. 1B is a schematic cross-sectional diagram of a first change form of the easy-peel type closure liner 50 shown in FIG. 1A. More specifically, different from that the release layer 210 shown in FIG. 1A is located on the lower surface of the bonding film 120 corresponding to the lifting part, the release layer 210 shown in FIG. 1B is located on the upper surface of the electromagnetic induction heating layer 300 corresponding to the lifting part, the lifting neck and the hollow area, and other elements in FIG. 1B are substantially the same as those of the easy-peel type closure liner 50 shown in FIG. 1A, so that the descriptions thereof are omitted here.

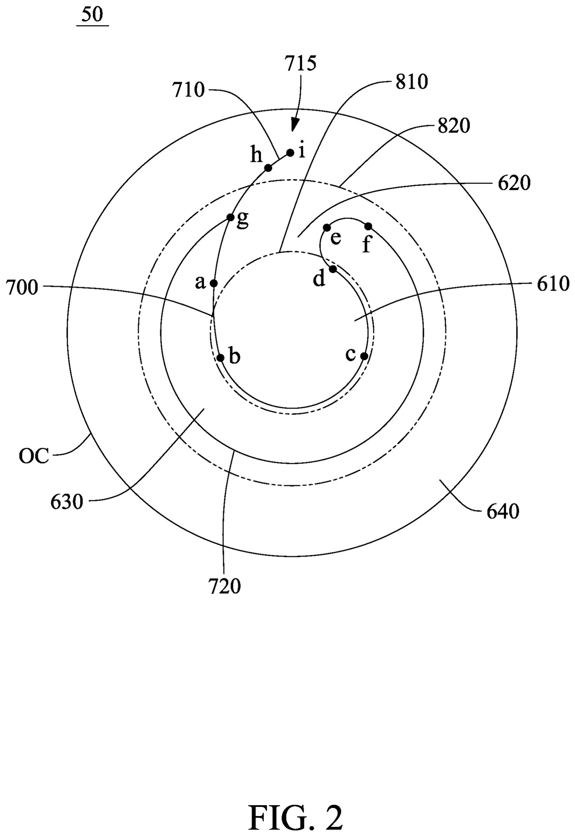

Taking FIG. 1B as an example, when the release layer 210 is coated on the upper surface of the electromagnetic induction heating layer 300, the coating area of the release layer 210 is not smaller than the area corresponding to the lifting part and the hollow area, and the coating area of the release layer 210 is not greater than a second coating range 820 shown in the FIG. 2 to FIG. 5 described later; and therefore, after the functional layer 100 is laminated with the layer below, and the hollow area is cut off downwards in the direction of the surface film 110 of the functional layer 100, the hollow area can be easily fallen off, it can be guaranteed that the lifting part is not prone to being adhered by the electromagnetic induction heating layer 300 below, and then the lifting part can be lifted and pinched more easily, so that the convenience for the user to peel is improved.

With reference to FIG. 1C, FIG. 1C is a schematic cross-sectional diagram of a second change form of the easy-peel type closure liner 50 shown in FIG. 1A. More specifically, different from FIG. 1A, FIG. 1C shows that the strong adhesive layer 200 is located between the electromagnetic induction heating layer 300 and the sealing layer 400, the release layer 210 is located on the lower surface of the electromagnetic induction heating layer 300 corresponding to the lifting part, the lifting neck and the hollow area, and other elements in FIG. 1C are substantially the same as those of the easy-peel type closure liner 50 shown in FIG. 1A, so that the descriptions thereof are omitted here.

Taking FIG. 1C as an example, when the release layer 210 is coated on the lower surface of the electromagnetic induction heating layer 300, the coating area of the release layer 210 is not smaller than the area corresponding to the lifting part; and therefore, after the functional layer 100 is laminated with the layer below, and the hollow area is cut off downwards in the direction of the surface film 110 of the functional layer 100, the hollow area can be easily fallen off, it can be guaranteed that the lifting part is not prone to being adhered by the sealing layer 400 below, and then the lifting part can be lifted and pinched more easily, so that the convenience for the user to peel is improved.

FIG. 1A, FIG. 1B and FIG. 1C are schematic cross-sectional diagrams of the easy-peel type closure liner 50 according to the present application, and the overlook diagram of the easy-peel type closure liner 50 in four embodiments shown in FIG. 2 to FIG. 5 are used as the reference to describe the peeling mode of the easy-peel type closure liner 50 in each embodiment of the present application in detail.

With reference to FIG. 2, FIG. 2 is an overlook diagram of an easy-peel type closure liner 50 according to Embodiment 1 of the present application. In some embodiments, the shape of the easy-peel type closure liner 50 according to the present application may be various geometric shapes such as a circle, a square, a rectangle, a rhombus, a triangle, a polygon, a cone, or a trapezoid. Taking FIG. 2 as an example, the circular easy-peel type closure liner 50 is shown in FIG. 2.

As shown in FIG. 2, the upper surface of the easy-peel type closure liner 50 may include a lifting part 610, a lifting neck 620, a hollow area 630 and a peripheral area 640. Specifically, taking FIG. 2 as an example, the lifting part 610 is an area enclosed by points a-b-c-d-a, the lifting neck 620 is an area between points g-e, the hollow area 630 is an area enclosed by points a-b-c-d-e-f-g, and the peripheral area 640 is an area enclosing the lifting part 610, the lifting neck 620, and the hollow area 630.

The hollow area 630 is formed by cutting with a hollow cutting line 720, taking FIG. 2 as an example, the hollow cutting line 720 is a line formed by connecting points a-b-c-d-e-f-g-a. The hollow area 630 is located on the periphery of the lifting part 610 and the hollow area 630 is connected to two sides of the lifting neck 620; and taking FIG. 2 as an example, one end (i.e., point g) of the hollow area 630 is connected to the left side of the lifting neck 620, and the other end (i.e., point e) of the hollow area 630 is connected to the right side of the lifting neck 620. Moreover, the hollow area 630 is formed by removing the functional layer in the section structure, so that the thickness of the easy-peel type closure liner 50 corresponding to the hollow area 630 is smaller than the maximum thickness of the easy-peel type closure liner 50, the user can stab the lower part of the lifting part 610 by fingernails and fingertips of fingers, then the lifting part 610 can be lifted and pinched more easily, and therefore the convenience for the user to peel is improved.

Then, a tear line 710 is arranged on the functional layer of the easy-peel type closure liner 50; taking FIG. 2 as an example, the tear line 710 is a line formed by connecting points a-g-h-i. One end (i.e., point a) of the tear line 710 is connected to the lifting part 610, and the other end (i.e., point i) of the tear line 710 and the outermost circle OC of the easy-peel type closure liner 50 are spaced by a tearing spacing 715. In some embodiments, the tearing spacing 715 is greater than 0 mm and the tearing spacing 715 is smaller than or equal to 20 mm. Moreover, in a preferred embodiment, the tearing spacing 715 is greater than 0 mm and the tearing spacing 715 is smaller than or equal to 10 mm. Therefore, through the arrangement of the tearing spacing 715, after the user pinches the lifting part 610 and lifts the lifting part 610 along the tear line 710, and the tail end (i.e., point i) of the tear line 710 is torn, the easy-peel type closure liner 50 will provide a buffering effect due to the ending of the tear line 710, thus the fact that the user only peel part of the easy-peel type closure liner 50 (such as the lifting part 610 and an area above) due to strong peeling force is avoided, and the user is reminded of properly changing the peeling force and the force application direction to improve the completeness of peeling of the closure liner.

In addition, the tear line 710 crosses one side of the lifting neck 620 (such as the left side of the lifting neck 620 shown in FIG. 2, namely point g), so that the user can sequentially pull up to peel off the lifting part 610, the lifting neck 620, the hollow area 630, and the peripheral area 640 in a clockwise direction, each layer in the easy-peel type closure liner 50 is pulled up by the user, and then the user can further completely peel the easy-peel type closure liner 50.

Moreover, in this embodiment, the tear line 710 is provided with at least one tearing cutting point, so that even if the functional layer is cut or the hollow area 630 is cut off, all blocks of the functional layer can still be connected at the tearing cutting point and cannot be scattered. In some specific examples, the functional layer corresponding to the tearing cutting point is not completely cut off in the vertical direction (for example, the material on the upper side in the functional layer is cut off in the vertical direction, and the material on the lower side in the functional layer is not cut off), and the functional layer corresponding to the tear line 710 except the tearing cutting point is completely cut off. In some other specific examples, the upper surface of the functional layer corresponding to the tearing cutting point is not cut in the vertical direction at a position 0.02 mm to 0.9 mm in the horizontal direction along the tear line 710, and the functional layer corresponding to the tear line 710 except the tearing cutting point is completely cut off. Therefore, when the user pinches and lifts the lifting part 610 by hand and tears to the tearing cutting point along the tear line 710, a short pause of the peeling action will be generated, so that the increased tearing force is accumulated to facilitate subsequent peeling. In addition, in the machining process, the lifting part 610 and the lifting neck 620 are pulled due to the existence of the tearing cutting point, preventing them from drooping or fluttering. This avoids any quality defects in the machining process.

Also, in this embodiment, the hollow cutting line 720 is not provided with a hollow cutting point, so that after the functional layer is cut to form the contour line of the hollow area 630, the residual material of the hollow area 630 can be more easily separated from the functional layer.

In some embodiments, if the release layer is coated on the lower surface of the bonding film or the electromagnetic induction heating layer, the coating area of the release layer is not smaller than the area corresponding to the lifting part 610, and taking FIG. 2 as an example, the coating area of the release layer is not smaller than a first coating range 810 (the area enclosed by dotted lines in FIG. 2); and therefore, after the hollow area 630 is cut off from the functional layer and the functional layer is laminated with the layer below, it can be ensured that the lifting part 610 is not easily adhered by the electromagnetic induction heating layer or the sealing layer below, and the lifting part 610 can be lifted and pinched more easily, so that the convenience for the user to peel is improved. Moreover, in another embodiment, if the release layer is coated on the upper surface of the electromagnetic induction heating layer, the coating area of the release layer is not smaller than the area corresponding to the lifting part 610 and the hollow area 630, and taking FIG. 2 as an example, the coating area of the release layer is not greater than the second coating range 820 (the area enclosed by dotted lines in FIG. 2); and therefore, after the functional layer is laminated with the layer below and the hollow area 630 is cut off downwards from the surface film direction of the functional layer, the hollow area 630 can be more easily stripped, the lifting part 610 can be ensured not prone to being adhered by the electromagnetic induction heating layer below, and the lifting part 610 can be lifted and pinched more easily, so that the convenience for the user to peel is improved.

In addition, in this embodiment, the hollow cutting line 720 and the tear line 710 can be combined into a large cutting line 700, and taking FIG. 2 as an example, the large cutting line 700 is a line formed by connecting points g-f-e-d-c-b-a-g-h-i. In some specific examples, the large cutting line 700 may be formed by cutting in a manner of continuously arranging and forming through a cutting knife, and further the large cutting line is formed in a one-step manner (or in a one-knife forming manner). Therefore, the large cutting line 700 may be cut in a one-section manufacturing manner, so that the manufacturing convenience is improved, and the easy-peel type closure liner is easy to peel and is attractive.

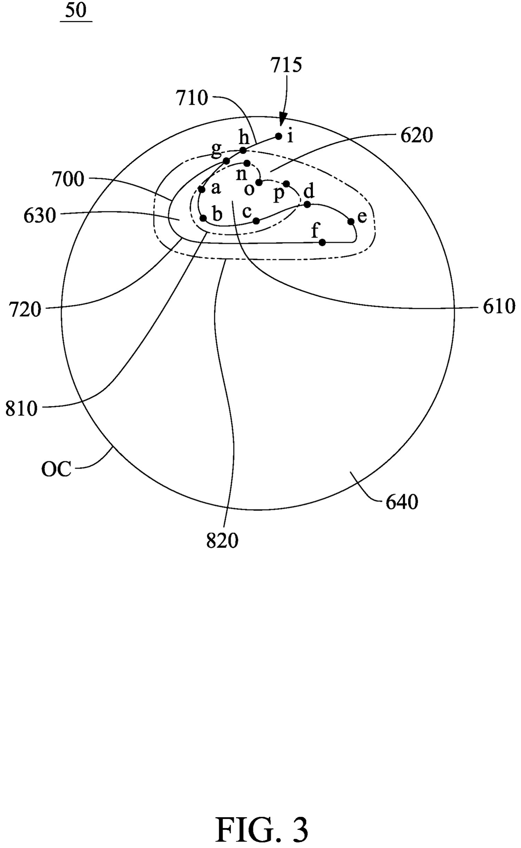

With reference to FIG. 3, FIG. 3 is an overlook diagram of an easy-peel type closure liner 50 according to Embodiment 2 of the present application. More specifically, different from the easy-peel type closure liner 50 in FIG. 2, FIG. 3 shows that the lifting part 610, the lifting neck 620 and the hollow area 630 are all positioned in the same half part of the easy-peel type closure liner 50.

As shown in FIG. 3, the lifting part 610 is an area enclosed by points a-b-c-d-a, the lifting neck 620 is an area between points h-e, the hollow area 630 is an area enclosed by points a-b-c-d-e-f-g-a, and the peripheral area 640 is an area enclosing the lifting part 610, the lifting neck 620 and the hollow area 630. Moreover, the tear line 710 is a line formed by connecting points a-g-h-i, the hollow cutting line 720 is a line formed by connecting points a-b-c-d-e-f-g-a, and the large cutting line 700 is a line formed by connecting points g-f-e-d-c-b-a-g-h-i. Furthermore, the tear line 710 is provided with at least one tearing cutting point, and the hollow cutting line 720 is not provided with the hollow cutting point.

**In** this embodiment, the lifting part 610, the lifting neck 620 and the hollow area 630 are all located in the same half part of the easy-peel type closure liner 50, so that a manufacturer can utilize the area of the other half part to carry out other design considerations so as to meet the design requirements of the manufacturer, and the design flexibility of the manufacturer and/or the attractiveness of the closure liner are/is improved. In some specific examples, taking FIG. 3 as an example, the lifting part 610, the lifting neck 620 and the hollow area 630 are all located in the upper half area of the easy-peel type closure liner 50. In other specific examples, the lifting part 610, the lifting neck 620 and the hollow area 630 may also be located in the lower half area, the left half area or the right half area of the easy-peel type closure liner 50.

In addition, if the release layer is coated on the lower surface of the bonding film or the electromagnetic induction heating layer, the coating area of the release layer is not smaller than the area corresponding to the lifting part 610, and taking FIG. 3 as an example, the coating area of the release layer is not smaller than the first coating range 810 (the area enclosed by dotted lines in FIG. 3); and if the release layer is coated on the upper surface of the electromagnetic induction heating layer, the coating area of the release layer is not smaller than the area corresponding to the lifting part 610 and the hollow area 630, and taking FIG. 3 as an example, the coating area of the release layer is not greater than the second coating range 820 (the area enclosed by dotted lines in FIG. 3).

Besides, since the elements in FIG. 3 are substantially the same as those of the easy-peel type closure liner 50 shown in FIG. 2 and also have the same function, the descriptions thereof are omitted here.

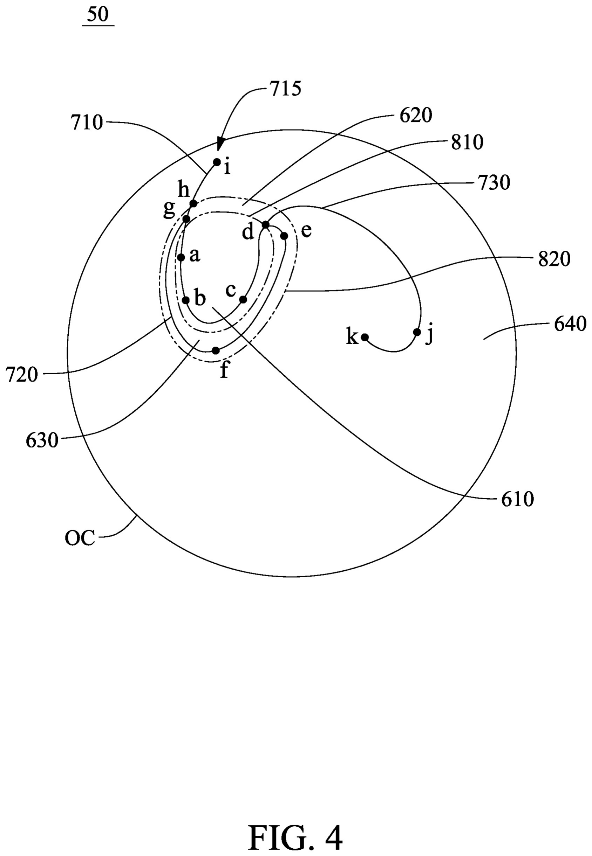

With reference to FIG. 4, FIG. 4 is an overlook diagram of an easy-peel type closure liner 50 according to Embodiment 3 of the present application. More specifically, different from the easy-peel type closure liner 50 in FIG. 3, FIG. 4 shows that the upper surface of the easy-peel type closure liner 50 is also provided with a tearing and twisting cutting line 730, wherein the tearing and twisting cutting line 730 is connected to the lifting part 610, and the tear line 710 and the tearing and twisting cutting line 730 are respectively connected to two ends of the lifting part 610.

As shown in FIG. 4, the lifting part 610 is an area enclosed by points a-b-c-d-a, the lifting neck 620 is an area between points h-e, the hollow area 630 is an area enclosed by points a-b-c-d-e-f-g-a, and the peripheral area 640 is an area enclosing the lifting part 610, the lifting neck 620 and the hollow area 630. Moreover, the tear line 710 is a line formed by connecting points a-g-h-i, and the hollow cutting line 720 is a line formed by connecting points a-b-c-d-e-f-g-a. Furthermore, the tear line 710 is provided with at least one tearing cutting point, and the hollow cutting line 720 is not provided with the hollow cutting point.

As shown in FIG. 4, the upper surface of the easy-peel type closure liner 50 is also provided with the tearing and twisting cutting line 730. The tearing and twisting cutting line 730 is a line formed by connecting points d-j-k. Moreover, the tear line 710 is connected to one end (i.e., point a) of the lifting part 610, and the tearing and twisting cutting line 730 is connected to the other end (i.e., point d) of the lifting part 610, so that the tear line 710 and the tearing and twisting cutting line 730 are respectively arranged on the left side and the right side of the hollow area 630. Therefore, through the arrangement of the tearing and twisting cutting line 730, after the user pinches the lifting part 610 to lift and pinch the lifting part 610 along the tear line 710 and tears along the tail end (i.e., point i) of the tear line 710, not only a buffering effect can be provided due to the ending of the tear line 710, but also the user can be guided to further peel the easy-peel type closure liner 50 along the tearing and twisting cutting line 730, and further the user is reminded of properly changing the peeling force and the force application direction so as to improve the completeness of peeling of the closure liner.

**In** addition, if the release layer is coated on the lower surface of the bonding film or the electromagnetic induction heating layer, the coating area of the release layer is not smaller than the area corresponding to the lifting part 610, and taking FIG. 4 as an example, the coating area of the release layer is not smaller than the first coating range 810 (the area enclosed by dotted lines in FIG. 4); and if the release layer is coated on the upper surface of the electromagnetic induction heating layer, the coating area of the release layer is not smaller than the area corresponding to the lifting part 610 and the hollow area 630, and taking FIG. 4 as an example, the coating area of the release layer is not greater than the second coating range 820 (the area enclosed by dotted lines in FIG. 4).

Besides, since the elements in FIG. 4 are substantially the same as those of the easy-peel type closure liner 50 shown in FIG. 3 and also have the same function, the descriptions thereof are omitted here.

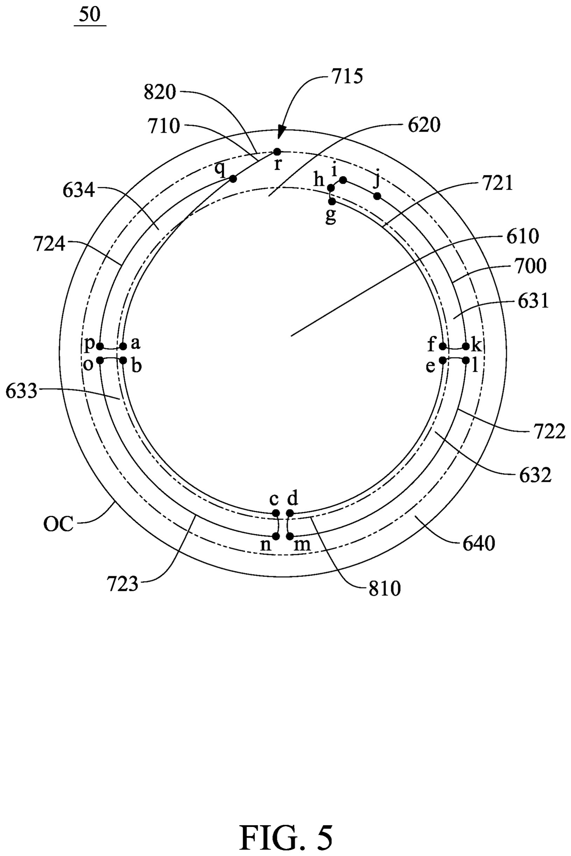

With reference to FIG. 5, FIG. 5 is an overlook diagram of an easy-peel type closure liner 50 according to Embodiment 4 of the present application. More specifically, different from the easy-peel type closure liner 50 in FIG. 2, FIG. 5 shows that the hollow area includes a plurality of hollow sub-areas, and each hollow sub-area is formed by cutting with each hollow secondary cutting line.

As shown in FIG. 5, the upper surface of the easy-peel type closure liner 50 may include the lifting part 610, the lifting neck 620, a first hollow sub-area 631, a second hollow sub-area 632, a third hollow sub-area 633, a fourth hollow sub-area 634, and the peripheral area 640. Specifically, taking FIG. 5 as an example, the lifting part 610 is an area enclosed by points a-b-c-d-e-f-g-q-a, the lifting neck 620 is an area between points q-h, the first hollow sub-area 631 is an area enclosed by points f-g-h-i-j-k-f, the second hollow sub-area 632 is an area enclosed by points e-l-m-d-e, the third hollow sub-area 633 is an area enclosed by points c-n-o-b-c, the fourth hollow sub-area 634 is an area enclosed by points a-p-q-a, and the peripheral area 640 is an area enclosing the lifting part 610, the lifting neck 620, the first hollow sub-area 631, the second hollow sub-area 632, the third hollow sub-area 633 and the fourth hollow sub-area 634.

The first hollow sub-area 631, the second hollow sub-area 632, the third hollow sub-area 633 and the fourth hollow sub-area 634 are located on the periphery of the lifting part 610, the first hollow sub-area 631 and the fourth hollow sub-area 634 are connected to two sides of the lifting neck 620 respectively, and taking FIG. 5 as an example, one end (i.e., point h) of the first hollow sub-area 631 is connected to the right side of the lifting neck 620, and one end (i.e., point q) of the fourth hollow sub-area 634 is connected to the left side of the lifting neck 620.

Each hollow sub-area may be formed by cutting with each hollow secondary cutting line, and taking FIG. 5 as an example, the first hollow sub-area 631 may be formed by cutting with a first hollow secondary cutting line 721, the second hollow sub-area 632 may be formed by cutting with a second hollow secondary cutting line 722, the third hollow sub-area 633 may be formed by cutting with a third hollow secondary cutting line 723, and the fourth hollow sub-area 634 may be formed by cutting with a fourth hollow secondary cutting line 724. Moreover, the first hollow secondary cutting line 721 is a line formed by connecting points f-g-h-i-j-k-f, the second hollow secondary cutting line 722 is a line formed by connecting points e-l-m-d-e, the third hollow secondary cutting line 723 is a line formed by connecting points c-n-o-b-c, and the fourth hollow secondary cutting line 724 is a line formed by connecting points a-p-q-a. **In** this embodiment, the hollow area may include a plurality of hollow sub-areas, and each hollow sub-area may be formed by cutting with each hollow secondary cutting line, so that the manufacturer can utilize the area of the upper surface of the easy-peel type closure liner 50 to carry out other design considerations so as to meet the design requirements of the manufacturer, and the design flexibility of the manufacturer and/or the attractiveness of the closure liner are/is improved.

Moreover, as shown in FIG. 5, the tear line 710 is a line formed by connecting points a-q-r, and the tear line 710 is provided with at least one tearing cutting point, so that even if the functional layer is cut or the first hollow sub-area 631, the second hollow sub-area 632, the third hollow sub-area 633 and the fourth hollow sub-area 634 are cut off, all blocks of the functional layer can still be connected at the tearing cutting point and cannot be scattered.

Furthermore, the hollow cutting line is a line formed by connecting points a-b-c-d-e-f-g-h-i-j-k-l-m-n-o-p-q-a, and the hollow cutting line is provided with at least three hollow cutting points, so that even if the functional layer is cut or the first hollow sub-area 631, the second hollow sub-area 632, the third hollow sub-area 633 and the fourth hollow sub-area 634 are cut off, all blocks of the functional layer can still be connected at the tearing cutting point and cannot be scattered. In some specific examples, the functional layer corresponding to each hollow cutting point is not completely cut off in the vertical direction (for example, the material on the upper side in the functional layer is cut off in the vertical direction, and the material on the lower side in the functional layer is not cut off), and the functional layer corresponding to the hollow cutting line except each hollow cutting point is completely cut off. In some other specific examples, the upper surface of the functional layer corresponding to each hollow cutting point is not cut off in the vertical direction at the position 0.02 mm to 0.9 mm in the horizontal direction along the hollow cutting line, and the functional layer corresponding to the hollow cutting line except each hollow cutting point is completely cut off.

In addition, in this embodiment, the first hollow secondary cutting line 721, the line formed by connecting f-e-d-c-b-a and the tear line 710 may be combined into a large cutting line 700, and taking FIG. 5 as an example, the large cutting line 700 is a line formed by connecting points f-g-h-i-j-k-f-e-d-c-b-a-q-r. In some specific examples, the large cutting line 700 may be formed by cutting in a manner of continuously arranging and forming through a cutting knife, and further the large cutting line is formed in a one-step manner (or in a one-knife forming manner). Therefore, the large cutting line 700 may be cut in a one-section manufacturing manner, so that the manufacturing convenience is improved, and the easy-peel type closure liner is easy to peel and is attractive. Moreover, the second hollow secondary cutting line 722, the third hollow secondary cutting line 723 and the fourth hollow secondary cutting line 724 may also be formed by cutting in the manner of continuously arranging and forming through the cutting knife.

In addition, if the release layer is coated on the lower surface of the bonding film or the electromagnetic induction heating layer, the coating area of the release layer is not smaller than the area corresponding to the lifting part 610, and taking FIG. 5 as an example, the coating area of the release layer is not smaller than the first coating range 810 (the area enclosed by dotted lines in FIG. 5); and if the release layer is coated on the upper surface of the electromagnetic induction heating layer, the coating area of the release layer is not smaller than the area corresponding to the lifting part 610 and the hollow area 630, and taking FIG. 5 as an example, the coating area of the release layer is not greater than the second coating range 820 (the area enclosed by dotted lines in FIG. 5).

Besides, since the elements in FIG. 5 are substantially the same as those of the easy-peel type closure liner 50 shown in FIG. 2 and also have the same function, the descriptions thereof are omitted here.

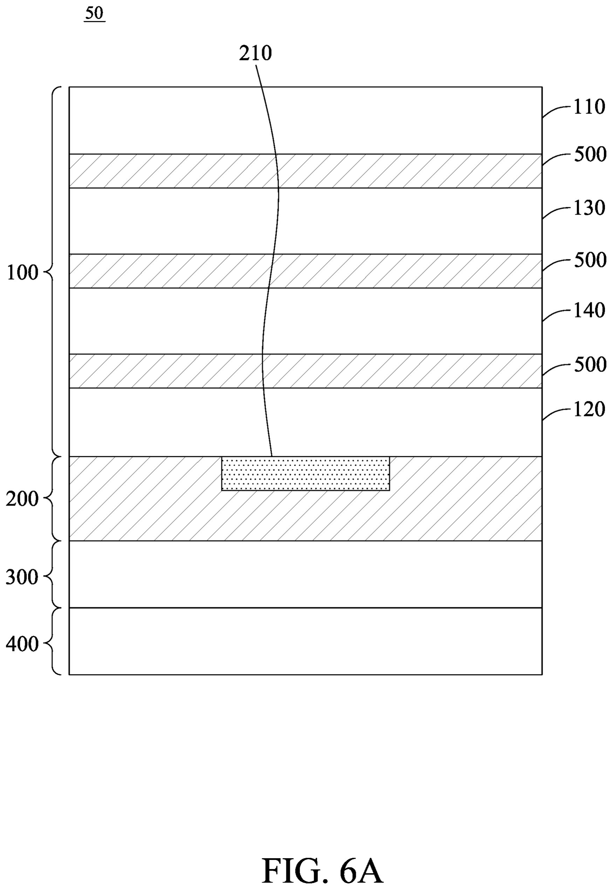

With reference to FIG. 6A, FIG. 6A is a schematic cross-sectional diagram of a second change form of the easy-peel type closure liner 50 shown in FIG. 1A. More specifically, different from the easy-peel type closure liner 50 shown in FIG. 1A, FIG. 6A shows that a foamed film 130 and a foamed plate film 140 are also arranged between the surface film 110 and the bonding film 120. In other words, the functional layer 100 shown in FIG. 6A includes the surface film 110, a foamed film 130, a foamed plate film 140 and the bonding film 120 in a sequence from top to bottom. In addition, in some other embodiments, the foamed film or the foamed plate film may be arranged between the surface film and the bonding film; and in other words, the functional layer includes the surface film, the foamed film and the bonding film in a sequence from top to bottom, or the functional layer includes the surface film, the foamed plate film and the bonding film in a sequence from top to bottom.

### <<Foamed film>>

In some embodiments, the material of the foamed film 130 may be, for example, EPE or EPP, and the thickness of the foamed film 130 is preferably 60 µm to 300 µm, but is not limited thereto. Because the foamed film 130 has the characteristics of being low in foaming rate and small in pore, the laminating effect between the foamed film 130 and the surface film 110 is good.

### <<Foamed plate film>>

In some embodiments, the material of the foamed plate film 140 may be, for example, EPE or EPP, and the thickness of the foamed plate film 140 is preferably 0.6 mm to 3 mm, but is not limited thereto. Therefore, the foamed plate film 140 can generate a thickening effect to improve the press sealing capacity of the easy-peel type closure liner 50, and then the press sealing effect is enhanced when the bottle opening and a cap are not well matched.

In this embodiment, each layer in the functional layer 100 may be laminated through a binder 500. In some embodiments, the binder 500 may be, for example, a dry compound adhesive, but is not limited thereto. As shown in FIG. 6A, the surface film 110 and the foamed film 130, the foamed film 130 and the foamed plate film 140, as well as the foamed plate film 140 and the bonding film 120 may be laminated through the binder 500.

In addition, other elements in FIG. 6A are substantially the same as those of the easy-peel type closure liner 50 shown in FIG. 1A, the descriptions thereof are omitted here. In addition, the release layer 210 shown in FIG. 6A may also be replaced with the release layer 210 shown in FIG. 1B, which is located on the upper surface of the electromagnetic induction heating layer 300 corresponding to the lifting part, the lifting neck and the hollow area.

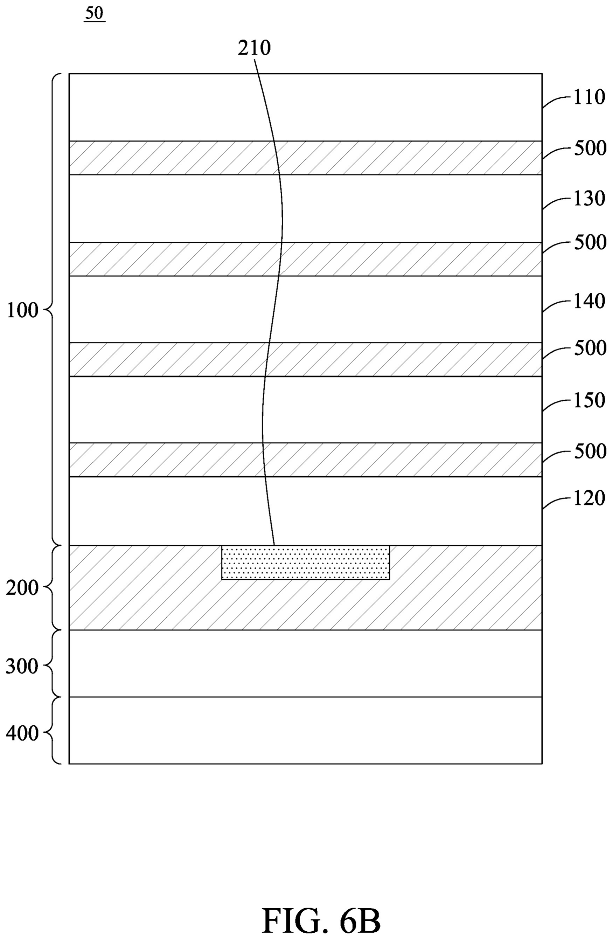

With reference to FIG. 6B, FIG. 6B is a schematic cross-sectional diagram of a third change form of the easy-peel type closure liner 50 shown in FIG. 1A. More specifically, different from the easy-peel type closure liner 50 shown in FIG. 1A, FIG. 6B shows that the foamed film 130, the foamed plate film 140 and the lamination film 150 are also arranged between the surface film 110 and the bonding film 120. In other words, the functional layer 100 shown in FIG. 6B includes the surface film 110, the foamed film 130, the foamed plate film 140, the lamination film 150 and the bonding film 120 in a sequence from top to bottom. Since the foamed film 130 and foamed plate film 140 shown in FIG. 6B are substantially the same as the those of the easy-peel type closure liner 50 shown in FIG. 6A, and the other elements are substantially the same as those of the easy-peel type closure liner 50 shown in FIG. 1A, the descriptions thereof are omitted here.

### <<Lamination film>>

In some embodiments, the material of the lamination film 150 may be at least one selected from the group consisting of PI, PEN, PET, PA, PP, PE, EPE, and EPP, and the thickness of the lamination film 150 is preferably 12 µm to 3000 µm, but is not limited thereto. Therefore, the lamination film 150 can improve the tensile strength of the easy-peel type closure liner 50.

In this embodiment, the foamed plate film 140 and the lamination film 150, as well as the lamination film 150 and the bonding film 120 may be laminated through the binder 500. In addition, the release layer 210 shown in FIG. 6B may be replaced with the release layer 210 shown in FIG. 1B, which is located on the upper surface of the electromagnetic induction heating layer 300 corresponding to the lifting part, the lifting neck and the hollow area.

With reference to FIG. 6C, FIG. 6C is a schematic cross-sectional diagram of a fourth change form of the easy-peel type closure liner 50 shown in FIG. 1A. More specifically, different from the easy-peel type closure liner 50 shown in FIG. 1A, FIG. 6C shows that a foamed layer 160 is also arranged between the surface film 110 and the bonding film 120. In other words, the functional layer 100 shown in FIG. 6C includes the surface film 110, the foamed layer 160 and the bonding film 120 in a sequence from top to bottom.

### <<Foamed layer>>

In some embodiments, the material of the foamed layer 160 may be, for example, EPE or EPP, and the thickness of the foamed layer 160 is preferably 60 µm to 3000 µm, but is not limited thereto. Therefore, the laminating effect between the foamed layer 160 and the surface film 110 is good, and the thickening effect can be achieved, so that the press sealing capacity of the easy-peel type closure liner 50 is improved, and then the press sealing effect is enhanced when the bottle opening and the cap are not well matched.

In addition, in this embodiment, as shown in FIG. 6C, the surface film 110 and the foamed layer 160, as well as the foamed layer 160 and the bonding film 120 may be laminated through the binder 500. Moreover, the sealing layer 400 is a combination of the sealing film 410 and the adhesive 420, and the adhesive 420 is located between the sealing film 410 and the electromagnetic induction heating layer 300. In some embodiments, the material of the sealing film 410 may be at least one selected from the group consisting of PE, PP, PET, PA, PVDC and EVOH, and the thickness of the sealing film 410 is preferably 12 µm to 100 µm; and the adhesive 420 may be the conventional adhesive (such as dry compound adhesive), but is not limited thereto. In addition, the release layer 210 shown in FIG. 6C may also be replaced with the release layer 210 shown in FIG. 1B, which is located on the upper surface of the electromagnetic induction heating layer 300 corresponding to the lifting part, the lifting neck and the hollow area.

### [Wireless information integrated flake]

Then, the wireless information integrated flake according to the present application is described.

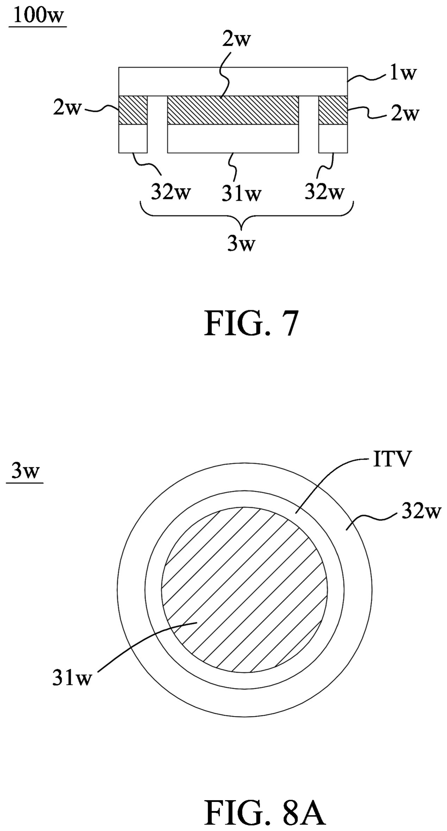

First, please refer to FIG. 7, FIG. 7 is a schematic cross-sectional diagram of a wireless information integrated flake 100w according to Embodiment 1 of the present application. As shown in FIG. 7, the wireless information integrated flake 100w may include a base film 1w, a first adhesive layer 2w, and an information and heating layer 3w. The first adhesive layer 2w is located between the base film 1w and the information and heating layer 3w so as to bond the base film 1w to the information and heating layer 3w. Each structure will be described in more detail below.

The base film 1w is used for manufacturing an initial layer of the wireless information integrated flake. In a specific example, the material of the base film 1w may be at least one selected from the group consisting of PI, PEN, PET, Polycarbonate (PC), PP, and PE. Moreover, the thickness of the base film 1w is preferably 20 µm to 150 µm, and within this range, the longitudinal tensile strength is large. In addition, as shown in FIG. 7, the lower surface of the base film 1w is bonded to the first adhesive layer 2w, and the upper surface of the base film 1w can serve as a printing surface for printing different patterns.

The first adhesive layers 2w is a layer used for bonding the base film 1w to the information and heating layer 3w. In a specific example, the first adhesive layer 2w only needs to be able to bond the base film 1w to the information and heating layer 3w, and the material of the first adhesive layer may be, for example, a dry compound adhesive. Moreover, the thickness of the first adhesive layer 2w may be 0.5 µm to 7 µm, and the peel strength between two layers of bonded materials may be greater than 4 N/15 mm.

Taking FIG. 7 as an example, the information and heating layer 3w includes an information area 31w and an electromagnetic induction heating ring 32w. The information area 31w has a wireless information reading, writing and transmitting function so that follow-up product tracing can be facilitated. The information area 31w is provided with an antenna 312w and a chip 311w which are electrically interconnected. Moreover, the electromagnetic induction heating rings 32w can perform heating through electromagnetic induction of an electromagnetic field generated by an electromagnetic induction sealing machine, then the sealing layer of the closure liner is heated and melted to be adhered to the container opening, thus serving as an electromagnet induction closure liner for sealing the container opening. By incorporating the wireless information integrated flake according to the present application, most of the heat generation can occur at the electromagnetic induction heating ring 32w, with only minimal heat being conducted through at least one physical connecting bridge 33w between the antenna 312w and the electromagnetic induction heating ring 32w. The length of the physical connecting bridge 33w may be 0.1 mm to 3 mm, the width of the physical connecting bridge 33w may be 0.01 mm to 5 mm, and the material of the physical connecting bridge 33w may be the same as that of the antenna 312w. Therefore, a large amount of heat generated during electromagnetic induction sealing can be prevented from being transmitted to a center area of the closure liner, and energy waste can be reduced. Moreover, when applying to a closure liner containing a battery, the thickness of the information and heating layer 3w may be 6 µm to 2.5 mm. When applying to a closure liner which contains no battery, the thickness of the information and heating layer 3w may be 6 µm to 300 µm.

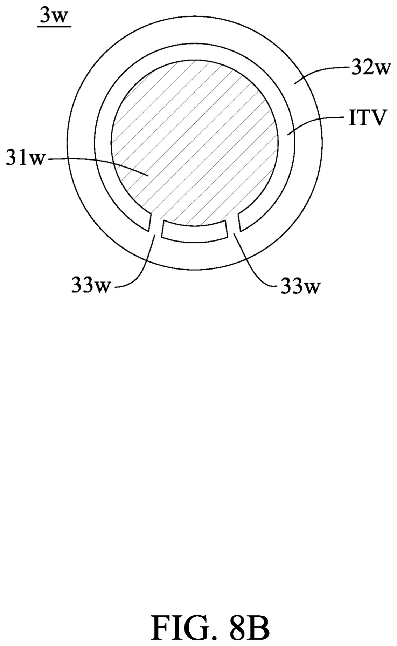

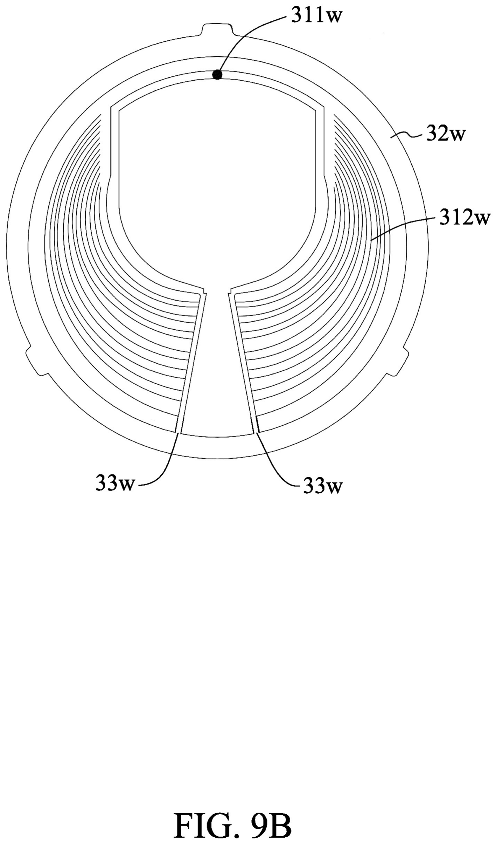

Then, FIG. 8A is a schematic plan diagram of a specific example of the information and heating layer 3w according to the present application and FIG. 8B is a schematic plan diagram of another specific example of the information and heating layer 3w according to the present application. As shown in FIG. 8A or FIG. 8B, the electromagnetic induction heating ring 32w surrounds the information area 31w in a plane view angle. Moreover, as shown in FIG. 8A, a spacing ITV fully occupies the position between the electromagnetic induction heating ring 32w and the information area 31w. That is, no physical connection element (e.g., a physical connecting bridge as described later) is disposed between the electromagnetic induction heating ring 32w and the information area 31w. Thus, because the spacing ITV fully occupies the position between the electromagnetic induction heating ring 32w and the information area 31w. Such spacing ITV can block heat from being conducted to the information area 31w when electromagnetic induction heating occurs, making it preferable. Moreover, the spacing ITV (a space between the outermost edge of the information area 31w and the innermost edge of the electromagnetic induction heating ring 32w) may be 0.1 mm to 3 mm. Then, as shown in FIG. 8B, a spacing ITV occupies most of the position between the electromagnetic induction heating ring 32w and the information area 31w. The spacing ITV can block a majority of heat from being conducted to the information area 31w when electromagnetic induction heating occurs, and the spacing ITV (the space between the outermost edge of the information area 31w and the innermost edge of the electromagnetic induction heating ring 32w) may be 0.1 mm to 3 mm. In addition, there may be at least one physical connecting bridge 33w (two are shown in FIG. 8B and FIG. 9B as described later) disposed between the antenna 312w and the electromagnetic induction heating ring 32w, the length of the physical connecting bridge 33w may be 0.1 mm to 3 mm, and the width of the physical connecting bridge 33w may be 0.01 mm to 5 mm. At this moment, although the electromagnetic induction heating ring 32w of a closed loop structure is electrically connected to the information area 31w, the distance of wireless communication is not reduced too much. That is, the spacing ITV may fully occupy the position between the electromagnetic induction heating ring 32w and the information area 31w, the spacing ITV and the physical connecting bridge 33w may be disposed simultaneously, or there may be no spacing (e.g., the physical connecting bridge 33w fully occupies the position between the electromagnetic induction heating ring 32w and the information area 31w).

In some specific examples, the material of the electromagnetic induction heating ring 32w may be metal such as aluminum, copper, gold, silver, or tin, but is not limited thereto. Moreover, from the perspectives of the effect of generating heat under a changing electromagnetic field and cost, the electromagnetic induction heating ring 32w is preferably aluminum foil, and the thickness of it is preferably 6 µm to 40 µm.

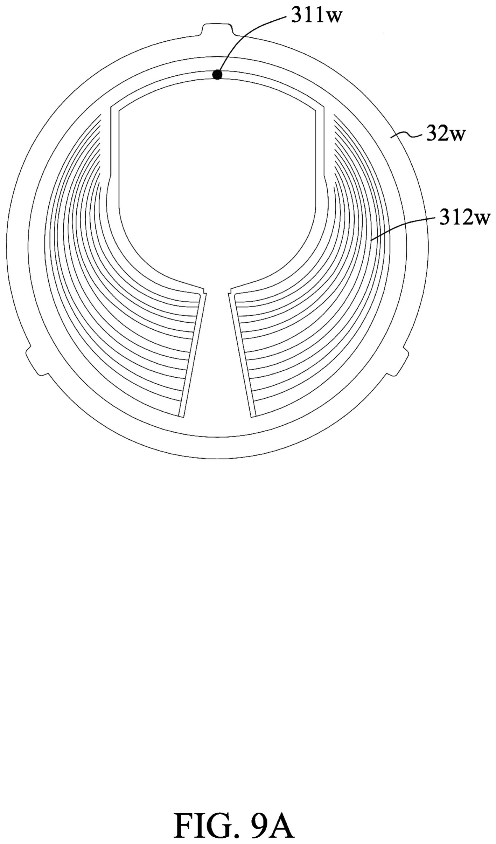

Then, FIG. 9A is a schematic plan diagram of a specific example of the information area according to the present application and FIG. 9B is a schematic plan diagram of another specific example of the information area according to the present application. FIG. 9A shows a corresponding implementation in which the spacing ITV fully occupies the position between the electromagnetic induction heating ring 32w and the information area 31w in FIG. 8A. FIG. 9B shows a corresponding implementation in which the spacing ITV occupies most of the position between the electromagnetic induction heating ring 32w and the information area 31w in FIG. 8B. In addition, as shown in FIG. 9A or FIG. 9B, the information area 31w includes a chip 311w and an antenna 312w. Moreover, when the wireless information transmission function can be achieved, the chip 311w and the antenna 312w may be arranged in a mode of FIG. 9A or FIG. 9B or other modes based on a radio frequency identification (RFID) frequency band to be used by the user, and which is not specially limited.

On the other hand, the chip 311w may have a unique identification code, may be selected according to purposes, and may be, for example, a radio frequency identification near field communication (RFID_NFC) chip, a radio frequency identification high frequency (RFID_HF) chip, a radio frequency identification ultrahigh frequency (RFID _UHF) chip or a radio frequency identification microwave (RFID_MW) chip, and the like, which is not specially limited. The chips can all be matched with the following antenna 312w to achieve the wireless information communication function.

Then, the antenna 312w is mainly used for generating a signal for wireless transmission, and the material thereof may be metals such as copper, silver, gold, tin, or aluminum, which is not specially limited.

In addition, although the base film 1w is disposed above and the information and heating layer 3w is disposed below in FIG. 7, the sequence of the base film 1w and the information and heating layer 3w may be reversed according to needs. That is, the base film 1w is disposed below and the information and heating layer 3w is disposed above.

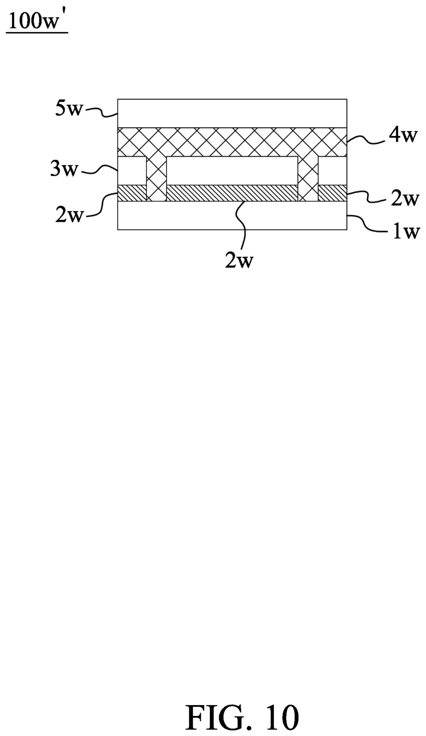

**In** addition, the wireless information integrated flake may also be a wireless information integrated flake 100w', which includes a protective layer 5w and a second adhesive layer 4w in addition to the base film 1w, the first adhesive layer 2w and the information and heating layer 3w, as shown in FIG. 10. The protective layer 5w is located on one side, away from the base film 1w, of the information and heating layer 3w. Moreover, the second adhesive layer 4w is located between the information and heating layer 3w and the protective layer 5w, and is a layer for bonding the information and heating layer 3w to the protective layer 5w.

**In** some specific examples, the second adhesive layer 4w only needs to be able to bond the information and heating layer 3w with the protective layer 5w, and the material of the second adhesive layer 4w may be dry compound adhesive, which is not specifically limited. Moreover, the thickness of the second adhesive layer 4w may be 0.5 µm to 7 µm, and preferably, the peel strength between two layers of bonded materials is greater than 4 N/15 mm. In addition, as shown in FIG. 10, the second adhesive layer 4w may extend to fill the spacing between the electromagnetic induction heating ring 32w and the information area 31w so as to improve the overall structural strength of the wireless information integrated flake 100w'.

Then, the protective layer 5w is described. The protective layer 5w is used for protecting the information area 31w (namely the chip 311w, the antenna 312w, and an additionally added battery) from damaging the chip 311w and the battery by external force to influence the wireless information transmission capability. The material of the protective layer 5w may be at least one selected from the group consisting of Polyethylene Terephthalate (PET), Polypropylene (PP), Polyethylene (PE), Polyamide (PA), Polyvinylidene Chloride (PVDC), Ethylene Vinyl Alcohol Copolymer (EVOH), Polyethylene Naphthalate (PEN), and Polyimide (PI). Moreover, in some preferable specific examples, the thickness of the protective layer 5w may be 12 µm to 100 µm.

In addition, the upper surface or the lower surface of the protective layer 5w may be used as the printing surface. Therefore, although FIG. 10 shows that the base film 1 is disposed below and the protective layer 5w is disposed above (an upper surface of the protective layer 5w is used as the printing surface), the sequence of the base film 1w and the protective layer 5w may be reversed as required. That is, the base film 1w is disposed above and the protective layer 5w is disposed below (a lower surface of the protective layer 5w is used as the printing surface).

### [Manufacturing method for an easy-peel type closure liner]

The manufacturing method for the easy-peel type closure liner 50 shown in FIG. 1A will be further described here.

First, a surface film coil stock is printed to obtain a printed surface film coil stock; then, a laminating surface of the printed surface film coil stock is coated with the binder, and the surface film coil stock and a bonding film coil stock are subjected to dry lamination, and then placed into a curing chamber for more than 24 hours, so as to obtain a functional layer coil stock.

Then, a lower surface of an electromagnetic induction heating layer coil stock is coated with the adhesive, and the electromagnetic induction heating layer coil stock and a laminating surface of a sealing film coil stock are subjected to dry lamination, and then placed into the curing chamber for more than 24 hours, so as to obtain a laminated part of the electromagnetic induction heating layer and the sealing layer. Alternatively, as a substitute of the sealing layer, the hot melt glue may be directly sprayed on a lower surface of the electromagnetic induction heating layer coil stock, so as to obtain a laminated part of the electromagnetic induction heating layer and the sealing layer.

Then, a lower surface of the bonding film of the functional layer coil stock is coated with the release layer, then an upper surface of the surface film is cut with a cutting die in accordance with a printed pattern (such as a pattern in FIG. 2 to FIG. 5), so as to obtain the tear line, the hollow cutting line (or each hollow secondary cutting line), the hollow area (or each hollow sub-area), the tearing and twisting cutting line, and the like. The coating area of the release layer is not smaller than the lifting part, and the hollow area (or each hollow sub-area) is formed by removing by the thickness of the functional layer. That is, the thickness of the hollow area (or each hollow sub-area) is equal to that of the laminated part of the electromagnetic induction heating layer and the sealing layer and is smaller than the maximum thickness of the easy-peel type closure liner.

The upper surface of the electromagnetic induction heating layer is coated with the strong adhesive layer. For example, the upper surface of the electromagnetic induction heating layer is coated with the strong adhesive layer in a full coating mode, and the electromagnetic induction heating layer and the lower surface of the bonding film coated with the release layer are subjected to dry lamination, and then placed in the curing chamber for more than 24 hours, so as to obtain an easy-peel type closure liner coil stock.

Finally, an upper surface of a surface film of the easy-peel type closure liner coil stock is cut downwards, so as to obtain the easy-peel type closure liner in a size required by a customer.

The peel strength between two layers of materials laminated by the adhesive and the binder is greater than 4 N/15 mm, and the peel strength between two layers of materials laminated by the strong adhesive layer is greater than 12 N/15 mm. The temperature of a drying channel above a printing machine is 60°C to 80°C, and the temperatures of 5 sections of a drying channel above a dry laminating machine are 60°C to 65°C, 65°C to 70°C, 70°C to 75°C, 75°C to 80°C and 80°C to 85°C respectively. The temperature of a laminating press roller of the dry laminating machine is 50°C to 60°C. The temperature of the curing chamber is 50°C to 55°C.

On the other hand, a functional layer with a variable form can be manufactured based on the following steps.

First, the surface film coil stock is coated with the binder, and the surface film coil stock and a foamed film coil stock are subjected to dry lamination, and then placed in the curing chamber for more than 24 hours, so as to obtain a first laminated part coil stock.

Second, a lower surface of a foamed film of the first laminated part coil stock is coated with the binder, and the first laminated part coil stock and an upper surface of a foamed plate film coil stock are subjected to dry lamination, and then placed in the curing chamber for more than 24 hours, so as to obtain a second laminated part coil stock.

Third, a lower surface of a lamination film coil stock is coated with the binder, and the lamination film coil stock and the bonding film coil stock are subjected to dry lamination, and then placed in the curing chamber for more than 24 hours, so as to obtain a third laminated part coil stock.

Finally, an upper surface of a lamination film of a third laminated part coil stock is coated with the binder, and the third laminated part coil stock and a lower surface of a foamed plate film of the second laminated part coil stock are subjected to dry lamination, and then placed in the curing chamber for more than 24 hours, so as to obtain the functional layer with a variable form.

The peel strength between the two layers of materials laminated by the binder is greater than 4 N/15 mm. The temperatures of 5 sections of a drying channel above a dry laminating machine are 60°C to 65°C, 65°C to 70°C, 70°C to 75°C, 75°C to 80°C and 80°C to 85°C respectively. The temperature of a laminating press roller of the dry laminating machine is 50°C to 60°C. The temperature of the curing chamber is 50°C to 55°C.

In addition, the lamination mode may be the above-mentioned dry lamination method or the conventional modes such as pasting and pressing, which is not specifically limited.

In addition, the easy-peel type closure liner in another preferred example of the present application is manufactured based on the following steps.

First, a lower surface of a surface film coil stock is coated with the adhesive, and the surface film coil stock and a bonding film coil stock are subjected to dry lamination, and then placed in the curing chamber for more than 24 hours, so as to obtain a functional layer coil stock.

Then, a lower surface of an electromagnetic induction heating layer coil stock is coated with the adhesive, and the electromagnetic induction heating layer coil stock and a laminating surface of a sealing film coil stock are subjected to dry lamination, and then placed in the curing chamber for more than 24 hours, so as to obtain a first laminated part coil stock. Alternatively, as a substitute of the sealing layer, the hot melt glue may be directly sprayed on the lower surface of the electromagnetic induction heating layer coil stock, so as to obtain the first laminated part coil stock.

Then, the upper surface of the electromagnetic induction heating layer of the first laminated part coil stock is coated with the release layer to obtain a second laminated part coil stock; and a coating area of the release layer is not smaller than the lifting part and the hollow area.

Then, a lower surface of the functional layer coil stock material is coated with the strong adhesive layer, and the functional layer coil stock and an upper surface of the second laminated part coil stock are subjected to dry lamination, and then placed in the curing chamber for more than 24 hours, so as to obtain an easy-peel type closure liner blank coil stock I.

Then, an upper surface of a surface film of the easy-peel type closure liner blank coil stock I is printed to obtain a printed easy-peel type closure liner blank coil stock II.

Then, an upper surface of a surface film of the easy-peel type closure liner blank coil stock II is cut downwards by a cutting die to form the tear line, the hollow cutting line (or each hollow secondary cutting line), the hollow area (or each hollow sub-area), the tearing and twisting cutting line, and the like.

Finally, the easy-peel type closure liner coil stock is cut into an easy-peel type closure liner in a size required by the customer.

### [Manufacturing of wireless information integrated flake coil stock]

The wireless information integrated flake coil stock in a preferred example of the present application is manufactured based on the following steps, and the wireless information integrated flake coil stock may be used in the manufacturing process of the easy-peel type closure liner coil stock as one implementation of the electromagnetic induction heating layer coil stock.

First, a laminating surface of the base film coil stock is coated with the laminating adhesive (a first adhesive layer), and after it is laminated with a laminating surface of a metal foil coil stock, a wireless information integrated flake blank coil stock is made. Second, etching processing is carried out on metal foil of the wireless information integrated flake blank coil stock, the antenna and the chip are bonded electrically, and then the chip and a bonding wire for bonding the chip with the antenna are packaged through a dispenser using a chip packaging protective adhesive. At this moment, the metal foil of the wireless information integrated flake blank coil stock forms the information and heating layer, and the wireless information integrated flake blank coil stock is the wireless information integrated flake coil stock.

The peel strength between two layers of materials laminated through the laminating adhesive is greater than 4 N/15 mm.

In addition, if it is desired to add a battery to the information and heating layer, a battery cell and the chip can be processed to be electrically connected through a fusion welding machine or a conductive adhesive.

On the other hand, based on the wireless information integrated flake coil stock, a laminating surface of a protective layer coil stock is coated with the dry compound adhesive (a second adhesive layer), and after it is subjected to dry lamination with a surface (the surface away from the base film) of the information and heating layer of the wireless information integrated flake coil stock, the laminated material is placed in the curing chamber for curing for more than 24 hours, so as to obtain a wireless information integrated flake coil stock related to another embodiment.

It is to be noted that the above description is only an illustrative example of the manufacturing of the easy-peel type closure liner according to the present application. In other words, those with ordinary knowledge in the art of the present application can also adjust the sequence to manufacture the easy-peel type closure liner according to the present application. Moreover, it describes the manufacturing of the easy-peel type closure liner containing the functional layer of a two-layer structure consisting of the surface film and the bonding film here, the functional layers with various variation forms may also be used as an alternative to the functional layers of the above-mentioned two-layer structure, and other lamination (adhering, bonding, or attaching, etc.) methods may be used as an alternative to dry lamination.

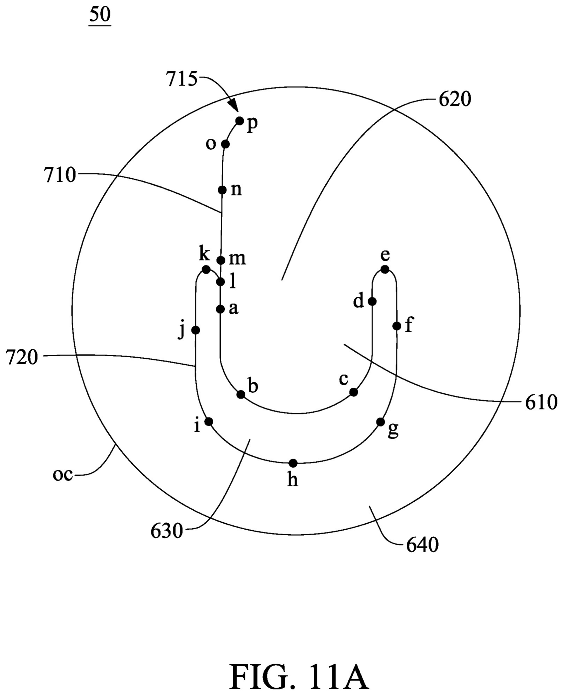

Furthermore, in order to clarify the embodiments covered by the easy-peel type closure liner of the present application, other particular examples would be presented to further describe other variational forms on the upper surface of the easy-peel type closure liner. With reference to FIG. 11A to FIG. 11C, FIG. 11A to FIG. 11C are overlook diagrams of an easy-peel type closure liner 50 according to other embodiments of the present application. It is to be noted that the following is described for the variational parts for such as the lifting part, the lifting neck, the hollow area, the tear line, and the tearing spacing; since the rest content may be substantially the same as those of the easy-peel type closure liner 50 shown in FIG. 2 to FIG. 5, the descriptions thereof are omitted here.

As shown in FIG. 11A, the upper surface of the easy-peel type closure liner 50 may include a lifting part 610, a lifting neck 620, a hollow area 630 and a peripheral area 640. Specifically, taking FIG. 11A as an example, the lifting part 610 is an area enclosed by points a-b-c-d-a, the lifting neck 620 is an area between points k-e, the hollow area 630 is an area enclosed by points a-b-c-d-e-f-g-h-i-j-k-l-a, and the peripheral area 640 is an area enclosing the lifting part 610, the lifting neck 620, and the hollow area 630. Also, a tear line 710 is arranged on the functional layer of the easy-peel type closure liner 50; taking FIG. 11A as an example, the tear line 710 is a line formed by connecting points a-l-m-n-o-p. In this configuration, one end (i.e., point a) of the tear line 710 is connected to the lifting part 610, and the other end (i.e., point p) of the tear line 710 and the outermost circle OC of the easy-peel type closure liner 50 are spaced by a tearing spacing 715.

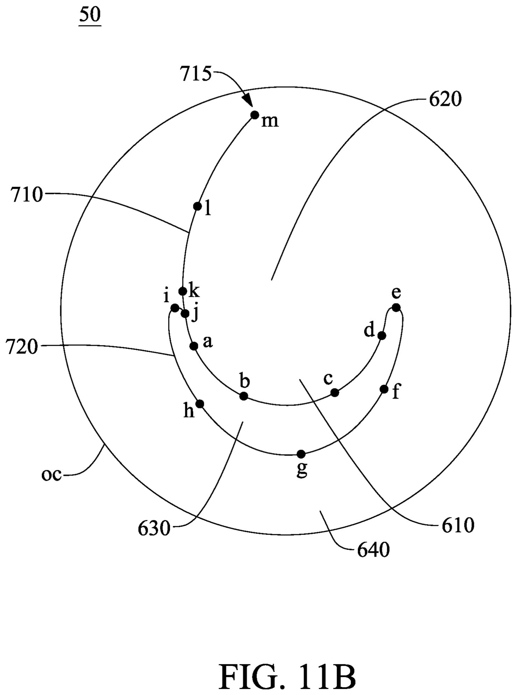

As shown in FIG. 11B, the upper surface of the easy-peel type closure liner 50 may include a lifting part 610, a lifting neck 620, a hollow area 630 and a peripheral area 640. Specifically, taking FIG. 11B as an example, the lifting part 610 is an area enclosed by points a-b-c-d-a, the lifting neck 620 is an area between points i-e, the hollow area 630 is an area enclosed by points a-b-c-d-e-f-g-h-i-j-a, and the peripheral area 640 is an area enclosing the lifting part 610, the lifting neck 620, and the hollow area 630. Also, a tear line 710 is arranged on the functional layer of the easy-peel type closure liner 50; taking FIG. 11B as an example, the tear line 710 is a line formed by connecting points a-j-k-l-m. In this configuration, one end (i.e., point a) of the tear line 710 is connected to the lifting part 610, and the other end (i.e., point m) of the tear line 710 and the outermost circle OC of the easy-peel type closure liner 50 are spaced by a tearing spacing 715.

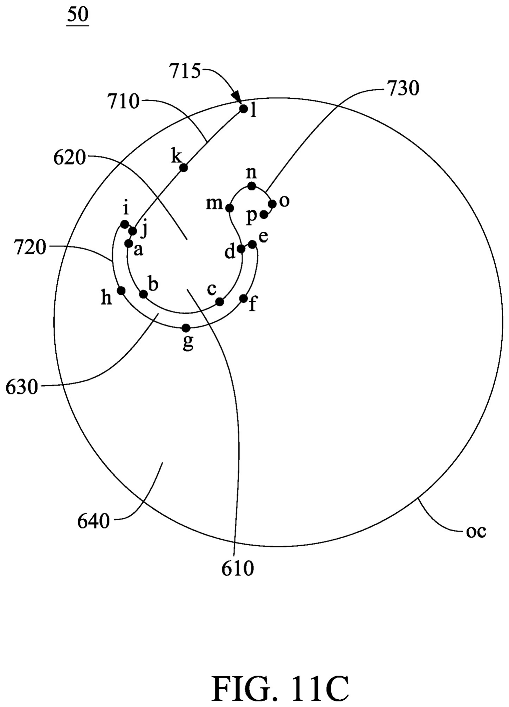

As shown in FIG. 11C, the upper surface of the easy-peel type closure liner 50 may include a lifting part 610, a lifting neck 620, a hollow area 630 and a peripheral area 640. Specifically, taking FIG. 11C as an example, the lifting part 610 is an area enclosed by points a-b-c-d-a, the lifting neck 620 is an area between points i-e, the hollow area 630 is an area enclosed by points a-b-c-d-e-f-g-h-i-j-a, and the peripheral area 640 is an area enclosing the lifting part 610, the lifting neck 620, and the hollow area 630. Also, a tear line 710 is arranged on the functional layer of the easy-peel type closure liner 50; taking FIG. 11C as an example, the tear line 710 is a line formed by connecting points a-j-k-l. In this configuration, one end (i.e., point a) of the tear line 710 is connected to the lifting part 610, and the other end (i.e., point l) of the tear line 710 and the outermost circle OC of the easy-peel type closure liner 50 are spaced by a tearing spacing 715. Further, the upper surface of the easy-peel type closure liner 50 is also provided with the tearing and twisting cutting line 730; taking FIG. 11C as an example, the tearing and twisting cutting line 730 is a line formed by connecting points d-m-n-o-p.

The present application is not limited to the above-mentioned implementations, and those with ordinary knowledge in the art of the present application may make various additions, subtractions, substitutions, and/or changes within the scope disclosed in claims, and the implementations obtained by appropriately combining the technical means revealed in the different implementations are also included in the technical scope of the present application.

## Claims

1. An easy-peel type closure liner (50), comprising:
a functional layer (100), comprising a surface film (110) and a bonding film (120) in a sequence from top to bottom;
a sealing layer (400), located below the functional layer (100);
a strong adhesive layer (200), located between the surface film (110) and the sealing layer (400); and
an electromagnetic induction heating layer (300), located between the surface film (110) and the sealing layer (400),
wherein an upper surface of the easy-peel type closure liner (50) comprises:
a lifting part (610);
a lifting neck (620); and
a hollow area (630), formed by cutting with a hollow cutting line (720), the hollow area (630) being located on the periphery of the lifting part (610), and the hollow area (630) being connected to two sides of the lifting neck (620);
wherein the thickness of the easy-peel type closure liner (50) corresponding to the hollow area (630) is smaller than the maximum thickness of the easy-peel type closure liner (50);
wherein the functional layer (100) of the easy-peel type closure liner (50) is provided with a tear line (710), one end of the tear line (710) is connected to the lifting part (610), the other end of the tear line (710) and the outermost circle (OC) of the easy-peel type closure liner (50) are spaced by a tearing spacing (715), the tearing spacing (715) is greater than 0 mm, and the tearing spacing (715) is smaller than or equal to 20 mm;
wherein the tear line (710) is provided with at least one tearing cutting point; and
wherein the easy-peel type closure liner (50) further comprises a release layer (210), and the release layer (210) is located on a lower surface of the bonding film (120) corresponding to the lifting part (610), or located on an upper surface or a lower surface of the electromagnetic induction heating layer (300) corresponding to the lifting part (610), the lifting neck (620), and the hollow area (630).

2. The easy-peel type closure liner (50) according to claim 1, wherein the functional layer (100) corresponding to the at least one tearing cutting point is not completely cut off in the vertical direction, and the functional layer (100) corresponding to the tear line (710) except the at least one tearing cutting point is completely cut off.

3. The easy-peel type closure liner (50) according to claim 1, wherein an upper surface of the functional layer (100) corresponding to the at least one tearing cutting point is not cut off in the vertical direction at a position 0.02 mm to 0.9 mm in the horizontal direction along the tear line (710), and the functional layer (100) corresponding to the tear line (710) except the at least one tearing cutting point is completely cut off.

4. The easy-peel type closure liner (50) according to claim 1, wherein a tearing and twisting cutting line (730) is further arranged on the upper surface of the easy-peel type closure liner (50) and connected to the lifting part (610), and the tear line (710) and the tearing and twisting cutting line (730) are connected to two ends of the lifting part (610) respectively.

5. The easy-peel type closure liner (50) according to claim 1, wherein the material of the surface film (110) is at least one selected from the group consisting of Polyimide (PI), Polyethylene Naphthalate (PEN), Polyethylene Terephthalate (PET), Polypropylene (PP), Polyethylene (PE), and Polyamide (PA).

6. The easy-peel type closure liner (50) according to claim 1, wherein the material of the bonding film (120) is at least one selected from the group consisting of Expandaple Polyethylene (EPE), Expandaple Polyproplene (EPP), PE, PP, PET, and PA.

7. The easy-peel type closure liner (50) according to claim 1, wherein the strong adhesive layer (200) is a dry compound adhesive or a hot melt lamination glue, the peel strength between the bonding film (120) and the electromagnetic induction heating layer (300) is greater than 12 N/15 mm through the dry compound adhesive or the hot melt lamination glue after lamination, and the material of the hot melt lamination glue is at least one selected from the group consisting of PE, PP, EMAA, EAA, EEA, EMAC, and Ethylene-Methyl Methacrylate Copolymer (EMMA).

8. The easy-peel type closure liner (50) according to claim 1, wherein between the surface film (110) and the bonding film (120), the following is further comprised:
a lamination film (150), the material of the lamination film (150) being at least one selected from the group consisting of PI, PEN, PET, PA, PP, PE, EPE, and EPP.

9. The easy-peel type closure liner (50) according to claim 1, wherein the electromagnetic induction heating layer (300) is aluminum foil or a wireless information integrated flake (100w, 100w').

10. The easy-peel type closure liner (50) according to claim 9, wherein the wireless information integrated flake (100w, 100w') comprises:
a base film (1w);
an information and heating layer (3w), comprising an information area (31w) and an electromagnetic induction heating ring (32w); and
a first adhesive layer (2w), located between the base film (1w) and the information and heating layer (3w),
wherein the information area (31w) is provided with an antenna (312w) and a chip (311w) which are electrically interconnected, and the electromagnetic induction heating ring (32w) surrounds the information area (31w) in a plane view angle.

11. The easy-peel type closure liner (50) according to claim 10, wherein the wireless information integrated flake (100w, 100w') further comprises:
a protective layer (5w), located on one side, away from the base film (1w), of the information and heating layer (3w); and
a second adhesive layer (4w), located between the information and heating layer (3w) and the protective layer (5w).

12. The easy-peel type closure liner (50) according to claim 10, wherein a spacing (ITV) is formed between the electromagnetic induction heating ring (32w) and the information area (31w).

13. The easy-peel type closure liner (50) according to claim 12, wherein the spacing (ITV) is a space between the outermost edge of the information area (31w) and the innermost edge of the electromagnetic induction heating ring (32w), and the space is 0.1 mm to 3 mm.

14. The easy-peel type closure liner (50) according to claim 10, wherein a spacing (ITV) fully occupies the position between the electromagnetic induction heating ring (32w) and the information area (31w).

15. The easy-peel type closure liner (50) according to claim 10, wherein the information and heating layer (3w) further comprises at least one physical connecting bridge (33w) which is used for connecting the information area (31w) to the electromagnetic induction heating ring (32w).
